# EUROPÄISCHE PATENTSCHRIFT

(11) **EP 0 638 599 B1**
(45) Veröffentlichungstag und Bekanntmachung des Hinweises auf die Patenterteilung: **10.11.1999**
(21) Anmeldenummer: 94111762.4
(22) Anmeldetag: 28.07.1994
(51) Int. Cl.: B01J 19/24, C08G 2/30, C08G 2/10

(54) **Verfahren zur Herstellung von Polyacetalen**
Process for producing polyacetals
Procédé de préparation de polyacétals

(30) Priorität: 13.08.1993 DE 4327245
(43) Veröffentlichungstag der Anmeldung: 15.02.1995
(73) Patentinhaber: Ticona GmbH, 65451 Kelsterbach (DE)
(72) Erfinder: Hoffmockel, Michael, Dr., D-65527 Niedernhausen (DE); Mück, Karl-Friedrich, Dr., D-65207 Wiesbaden (DE); Schlaf, Helmut, Dr., D-65779 Kelkheim (DE); Burg, Karlheinz, Dr., D-65207 Wiesbaden (DE)

(56) Entgegenhaltungen:
- EP-A- 0 028 499
- EP-A- 0 080 656
- EP-A- 0 325 052
- EP-A- 0 347 119
- EP-A- 0 389 227
- DE-A- 1 770 281

## Beschreibung

Es sind zahlreiche Verfahren zur Herstellung von Oxymethylenhomo- und Oxymethylencopolymeren aus Formaldehyd oder cyclischen Oligomeren des Formaldehyds, insbesondere Trioxan, in Gegenwart von kationisch wirksamen Initiatoren bekannt. Die kontinuierliche Polymerisation der Monomeren im technischen Maßstab ist beispielsweise in vielen Veröffentlichungen beschrieben (US-A-3,027,352, US-A-3,803,094, DE-C-1 161 421, DE-C-1 495 228, DE-C-1 720 358 und DE-C-3 018 898). Als Polymerisationsreaktoren sind u.a. beschrieben: Kneter, Extruder, Walzen oder Bänder. Gemeinsames Merkmal dieser Verfahren ist ein während der Polymerisation stattfindender Phasenübergang von gasförmigen bzw. flüssigen Monomeren zum teilkristallinen festen Polymeren. Das Abführen der hierbei frei werdenden Polymerisations- und Kristallisationswärme ist oftmals nur durch eine teilweise Verdampfung der Monomeren möglich und verursacht daher Umsatzeinbußen.

In der europäischen Patentschritt EP-B-0 080 656 ist ein Verfahren zur kontinuierlichen Massepolymerisation von Trioxan in homogener, flüssiger Phase bei Temperaturen oberhalb von 135°C beschrieben. In diesem Verfahren ist der Desaktivierungsreaktor gegenüber dem Polymerisationsreaktor räumlich durch eingebaute Engpässe abgetrennt, die die Strömungsgeschwindigkeit der Schmelze lokal erhöhen. Der Desaktivierungsreaktor ist so ausgebildet, daß die Polymer/Monomer-Schmelze in kurzer Zeit, beispielsweise in etwa 0,2 Minuten, intensiv durchmischt wird. Als Vorteile dieses Verfahrens werden u.a. genannt: einfache Handhabung des Prozesses, geringer Energieaufwand und Polymerisate mit gleichbleibender Produktqualität.

Bei Nacharbeitung des bekannten Verfahrens hat sich jedoch herausgestellt, daß während der Polymerisation in verstärktem Maße Nebenreaktionen ablaufen, die ein Entstehen unerwünschter Endgruppen an den Polymerketten begünstigen. Sie setzen u.a. die thermische Beständigkeit der erzeugten Polymeren herab und beeinflussen auf diese Weise die Verarbeitungs- und Gebrauchseigenschaften der Produkte.

Aufgabe der Erfindung ist es, ein weiteres Verfahren zur Herstellung und Endgruppenstabilisierung von Polyacetalen in homogener Phase bereitzustellen.

Die Erfindung betrifft somit ein Verfahren zur kontinuierlichen Herstellung von endgruppenstabilen Homo- und Copolyoxymethylenen in homogener Phase, bei dem cyclische Formaldehydoligomere in Gegenwart von Protonensäuren als Initiatoren in in einem ersten Verfahrensschritt in einer Polymerisationszone bei in der Praxis bekannten Werten für Temperatur und Druck polymerisiert werden, in einem zweiten Verfahrensschritt der Initiator durch Zugabe eines Desaktivators desaktiviert wird und in einem nachgeschalteten Entgasungsaggragat die flüchtigen Bestandteile aus dem Reaktionsgemisch entfernt werden, das dadurch gekennzeichnet ist, daß die Polymerisation und die Desaktivierung in einem Rohrreaktor mit statischen Mischelementen ausgeführt werden, wobei ein fließender Übergang ohne Abtrennvorrichtungen zwischen Polymerisations- und Desaktivierungszone besteht, der lediglich durch die Zugabe des Desaktivators festgelegt ist, die Verweilzeit der Reaktionskomponenten in der Polymerisationszone 0,1 bis 10, vorzugsweise 0,3 bis 5 und insbesondere 0,5 bis 2 Minuten, und in der Desaktivierungszone 1 bis 15 Minuten beträgt, neben der Desaktivierung eine Stablisierung der Kettenenden in Gegenwart von Restmonomeren vorgenommen wird und gegebenenfalls die Zugabe von Zusatzstoffen nach erfolgter Entgasung in einem Konfektionierextruder erfolgt.

Die Menge der als Initiator zugegebenen Protonensäuren beträgt 0,005 bis 500 ppm, vorzugsweise 0,01 bis 50 ppm und insbesondere 0,01 bis 5 ppm,

Durch das Verfahren gemäß der Erfindung gelingt es, ohne Erhöhung der lokalen Strömungsgeschwindigkeit der Schmelze zwischen den einzelnen Reaktionszonen aber erhöhter Verweilzeit in der Desaktivierungszone die Bildung der destabilisierenden Endgruppen durch die Prozeßführung weitgehend zu unterdrücken und den Restanteil der unerwünschten Endgruppen durch einen der Polymerisation nachgeschalteten Prozeß zu entfernen bzw. zu verkappen.

Als Oligomer für die Homo- und Copolymerisation gemäß der Erfindung wird vorzugsweise Trioxan eingesetzt. Entscheidend für den erfolgreichen Ablauf des Verfahrens ist es, daß der notwendige hydrolytische Kettenendenabbau bzw. die Endgruppenverkappung sich unmittelbar an die Polymerisation anschließt und in Gegenwart von Restmonomeren, d.h. nicht umgesetzten Monomeren, erfolgt.

Als Comonomere für die Polymerisation z.B. des Trioxans eignen sich cyclische Acetale wie Dioxolan, Diethylenglykol- oder Triethylenglykolformal, Butandiolformal oder lineare Polyacetale z.B. Polydioxolan oder Polyethylenglykolformal. Die Mengenanteile der Comonomeren oder Mischungen daraus betragen 0,5 bis 50 Gew.-%, vorzugsweise von 1 bis 30 Gew.-%, insbesondere 2 bis 10 Gew.-%. Die Zugabe der Comonomeren kann entweder in Mischung mit dem Hauptmomomeren oder in Form eines reaktiven Präpolymeren erfolgen. Gleichfalls durchführbar ist ein Zuschleusen des oder der Comonomeren nach erfolgter Homopolymerisation des Hauptmomoneren in die Polymerschmelze. Das oder die entsprechenden Comonomeren werden dann durch Transacetalisierungsreaktionen statistisch in die Polymerkette eingebaut. Für diese Reaktion liegt die benötigte Verweilzeit im Bereich von 0,1 bis 10 Minuten, vorzugsweise 0,3 bis 5 Minuten, insbesondere 0,5 bis 2 Minuten.

Die Verwendung von bifunktionellen Comonomeren führt zu teilvernetzten oder verzweigten Produkten.

Als Initiatoren eignen sich Protonensäuren wie Perchlorsäure, Perfluoralkansulfonsäuren, vorzugsweise Trifluormethansulfonsäure sowie deren Anhydride sowie Heteropolysäuren oder Isopolysäuren (EP-B-0 325 052 und EP-B-0 347 119). Besonders vorteilhaft sind Heteropolysäuren mit Phosphor als Heteroatom. Am besten geeignet ist die Wolframatophosphorsäure H₃[P(W₃O₁₀)₄].

Durch die Verwendung von kationisch wirksamen Initiatoren mit voluminösen Anionen, wie sie die Hetero- und Isopolysäuren aufweisen, können unerwünschte Nebenreaktionen unterdrückt werden.

Die Initiatoren können in Mengen von 0,005 bis 500 ppm eingesetzt werden. Der bevorzugte Bereich liegt bei 0,01 bis 50 ppm, insbesondere bei 0,01 bis 5 ppm. Da die Initiatorkonzentration in hohem Maße die Molmasse beeinflußt, ist es empfehlenswert, den Initiator in gelöster, verdünnter Form zu dosieren. Als Lösemittel können prinzipiell alle die Polymerisation nicht beeinflussende Verbindungen verwendet werden; vorzuziehen sind cyclische und lineare Ether wie Oligoglykoldialkylether oder deren Mischungen mit aliphatischen oder cycloaliphatischen Kohlenwasserstoffen z.B. Cyclohexan; überraschenderweise sind auch Lactone wie Butyrolacton geeignet.

Die Molmassen der Polymeren können in bekannter Weise durch Regler auf die gewünschten Werte eingestellt werden. Als Kettenüberträger kommen in erster Linie Formale einwertiger Alkohole wie Methylal oder Butylal in Frage. Weniger geeignet sind die diesen Verbindungen zugrundeliegenden Alkohole selbst oder Wasser als Regler, da sie bei der Kettenübertragung die Bildung instabiler Kettenenden verursachen. Die üblicherweise verwendeten Mengen liegen bei 10 bis 5000 ppm, die bevorzugte Konzentration bei 50 und 1000 ppm. Die Dosierung der Regler kann in bekannter Weise durch Zumischung zu den Monomeren vorgenommen werden. Es ist darüberhinaus aber auch möglich, die als Regler dienenden Substanzen zusammen mit dem Initiator in gleicher Lösung oder getrennt zu dosieren.

Als Polymerisationsreaktoren kommen alle Aggregate in Frage, die eine schnelle homogene Durchmischung von Monomeren und Initiatorlösung gewährleisten, den während der Polymerisation stattfindenden Viskositätsanstieg ohne Leistungsverlust überwinden und eine homogene Einmischung der Desaktivatoren, Stabilisatoren und Zuschlagstoffe garantieren. Von den einsetzbaren Aggregaten wie Kneter, Extruder, Rührkessel oder Rohrreaktor mit Einbauten sind mit statischen Mischern ausgestattete Rohrreaktoren aufgrund des engen Verweilzeitspektrums für die Polymerschmelze vorzuziehen. Im Gegensatz zu der EP-B 0 080 656 wird das Verfahren in solchen Apparaten durchgeführt, die keine eingebauten Abtrennvorrichtungen in Form von Engpässen z.B. vor der Eindosierung des Desaktivators besitzen. Die Erhöhung der lokalen Strömungsgeschwindigkeit der Schmelze zwischen den einzelnen Reaktionszonen ist somit nicht erforderlich.

Der Polymerisationsreaktor ist temperierbar und druckfest ausgelegt. Durch die Einrichtung von Temperierzonen kann dem Reaktor ein bestimmtes Temperaturprofil aufgeprägt werden. Entlang des Reaktors befinden sich Meßstellen für Druck und Temperatur sowie Dosierstellen für Monomere, Initiator, Desaktivator und andere Zuschlagstoffe. Die bei der Polymerisation angewandten Temperaturen und Drücke entsprechen den üblichen, in der Praxis bekannten Werten, wie sie z.B. in der EP-B-0 080 656 beschrieben sind, und auf die hiermit Bezug genommen wird.

Für jeden der angegebenen Verfahrensschritte sind die Dimensionen, d.h. Durchmesser und Länge der entsprechenden statischen Mischelemente, in Abhängigkeit von Viskosität und Verweilzeit auszuwählen, wobei der Druckverlust möglichst klein gehalten werden soll. Hierbei greift man auf die Angaben der Hersteller derartiger Mischelemente zurück.

So muß beispielsweise ein Rohrreaktor derart ausgelegt sein, daß ein enges Verweilzeitspektrum resultiert, welches einen Gleichgewichtsumsatz ermöglicht, bei dem dann durch minimierte Verweilzeit zwangsläufig wenig Nebenreaktionen auftreten können.

Eine geeignete Vorrichtung ist in der am 13. August 1993 eingereichten deutschen Patentanmeldung DE-A-43 27 246 mit dem Titel "Vorrichtung zur kontinuierlichen Herstellung von Polyacetalen und ihre Verwendung" beschrieben, auf die hiermit Bezug genommen wird.

Es hat sich gezeigt, daß die Verweilzeit der Reaktionsmischung im polymerisationsaktiven Zustand von entscheidendem Einfluß auf den Umsatz der Monomeren und den Ablauf der nicht erwünschten Nebenreaktionen ist. Die einzuhaltende Verweilzeit beträgt 0,1 bis 10 Minuten, vorzugsweise 0,3 bis 5 Minuten und insbesondere 0,5 bis 2 Minuten. Der zu erzielende Umsatz liegt dabei bei 60 bis 80 Gew.-%, bezogen auf die eingesetzten Monomere. Die Molmassen (M_{w}) der erzeugten Polyacetale liegen ohne Verwendung von Reglern im Bereich von 50.000 bis 300.000 (GPC gegen Polystyrolstandard).

Zur Desaktivierung des Initiators in der Polymerschmelze werden basische Verbindungen z.B. Salze wie Soda oder Dinatriumhydrogenphosphat sowie aliphatische oder aromatische primäre, sekundäre oder tertiäre Amine verwendet, wobei bevorzugt leicht flüchtige tertiäre Amine zum Einsatz kommen.

Es hat sich dabei überraschend herausgestellt, daß die als Desaktivatoren verwendeten basischen Salze oder Amine darüberhinaus in der Lage sind, instabile Kettenenden chemisch abzubauen. Von besonderem Vorteil ist dabei die Gegenwart von nicht umgesetzten Monomeren, die die Funktion eines Lösemittels und Transportvermittlers zur verbesserten Diffusion übernehmen. Die thermische Stabilität der so behandelten Polyacetalcopolymeren entspricht den Produkten, die durch Lösemittelhydrolyse aufgearbeitet werden. Die erhaltenen Produkte zeigen sehr gute Farbwerte und sind stippenfrei.

Die Konzentrationen der alkalischen Agenzien bewegen sich bei 0,001 bis 3,0 Gew.-%, bezogen auf die Polymermenge, wobei der Bereich von 0,02 bis 2,0 Gew.-% und insbesondere von 0,05 bis 1,0 Gew.-% bevorzugt ist.

Die im zweiten Verfahrensschritt in der Desaktivierungszone anzuwendende Temperatur liegt bei 150°C bis 250°C, vorzugsweise 170°C bis 200°C. In dem unteren Temperaturbereich kann gegebenenfalls ein Zusatz kleiner Mengen Wasser oder primärer Alkohole mit bis zu 3 C-Atomen im Alkylrest im Mengenbereich von 0,5 bis 5 Gew.-%, bezogen auf die Polymermenge, erfolgen, wodurch die Aktivität der endgruppenabbauenden Agenzien erhöht und die erforderliche Kontaktzeit verkürzt wird. Hierbei ist die Effizienz von Wasser oder primären Alkoholen deutlich größer als die von primären Alkoholen. Eine Abwandlung des Verfahrens besteht darin, daß der Temperaturbereich bei 175°C bis 250°C, vorzugsweise bei 175°C bis 200°C liegt, wobei in Abwesenheit von Wasser oder primären Alkoholen gearbeitet wird. Es hat sich für die Abbaugeschwindigkeit als vorteilhaft erwiesen, 20 bis 30°C über der Polymerisationstemperatur zu bleiben. Der einzuhaltende Druckbereich reicht von 20 bis 200 bar, vorzugsweise von 20 bis 50 bar.

Die einzustellende Verweilzeit in der Desaktivator- und Stabilisierungszone beträgt vorzugsweise 1 bis 15 Minuten, insbesondere 2 bis 10 Minuten.

Die Kombination der Desaktivierung des Initiators mit der Stabilisierung, d.h. dem chemischen Abbau der instabilen Kettenenden von Copolymeren kann vorteilhaft auch für die gleichzeitige Desaktivierung und Verkappung der Kettenenden von Homopolymeren eingesetzt werden. Durch die gleichzeitige Zugabe eines geeigneten Desaktivators und einer die Hemiacetalendgruppen verschließenden Komponente, wie Carbonsäureanhydride oder Orthocarbonsäureester, werden die Halbacetalendgruppen zu thermisch stabilen Ester- oder Ethergruppen umgesetzt. Auch in diesem Fall ist es von besonderem Vorteil, wenn die Reaktion in Gegenwart nicht umgesetzter Monomerer stattfindet.

In dem anschließenden Entgasungsteil werden die flüchtigen Bestandteile, z.B. nicht umgesetzte Monomere, Abbauprodukte, Lösemittel und Desaktivatoren, durch Druckabsenkung verdampft. Nach erfolgter Entgasung werden in einem Konfektionierextruder die üblichen Zusatzstoffe eingemischt. Es handelt sich dabei u.a. um Stabilisatoren gegen Licht, Wärme, Oxidation, um Nukleierungsmittel und Pigmente, Gleitmittel und Füllstoffe wie Kreide und Glasfaser.

Die hergestellten Produkte zeichnen sich gegenüber herkömmlichen Polyacetalen durch eine unimodale Molmassenverteilung aus. Der fehlende niedermolekulare Anteil führt zu Produkten mit vergleichbaren Härte- und Steifigkeitswerten, sowie erhöhter Zähigkeit. Die Produkte finden auf den üblichen Einsatzgebieten, wie Automobilbau, Elektroindustrie, Maschinenbau sowie Sanitär- und Wasserinstallationen, Verwendung.

### Beispiele

Die Monomermischung, bestehend aus Trioxan und Dioxolan, wurde in einem temperierten Vorratskessel (80°C) angesetzt. Über eine Dosierpumpe wurde die Monomermischung am Reaktorkopf in den Polymerisationsreaktor (Rohrreaktor ausgestattet mit statischen Mischelementen) eingebracht. Eine Lösung des Initiators wird im Reaktorkopf in den Monomerstrom eingedüst. In der Vormischstrecke wurden die beiden Mischungen innig miteinander vermischt. Die Polymerisation fand im folgenden Reaktorabschnitt statt. Anschließend wurde die Desaktivator- bzw. Verkappungslösung in die Polymerschmelze eingespritzt und über statische Mischer homogen eingearbeitet. Die Desaktivierung bzw. Endgruppenverkappung fand in der als Verweilzeitstrecke ausgelegten dritten Zone des Reaktors statt. Der Druck im Reaktor wurde über ein Drosselventil am Reaktorausgang eingestellt. Das Produkt wurde über dieses Drosselventil auf Atmosphärendruck entspannt und erstarrte spontan. Dabei verdampfte ein Großteil der Restmonomere.

Die Temperatur in der Desaktivatorzone bei den Beispielen der Tabelle 1 betrug in der Regel 155°C.

Die Beispiele 1 V und 2V sind Vergleichsbeispiele.

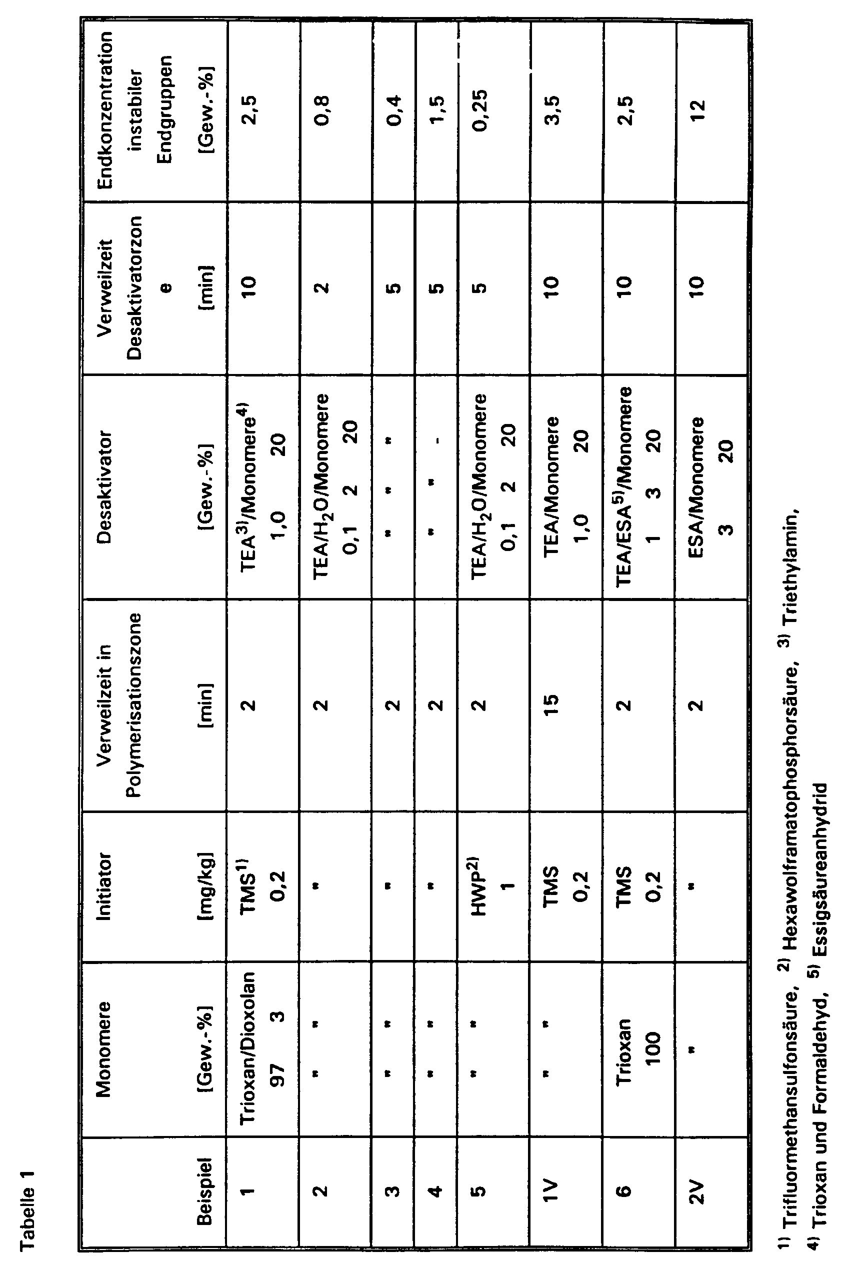

Die Tabelle 2 zeigt den Einfluß Von Temperatur und Wassergehalt in der Desaktivatorzone an. Hierbei ist deutlich ablesbar, daß höhere Temperaturen bei Abwesenheit von Wasser in der Desaktivatorzone den Abbau der vorhandenen instabilen Endgruppen im Rohpolymer wesentlich erhöhen.

**Tabelle 2**

| Beispiele | Desaktivator | Temperatur in der Desaktivatorzone [°C] | Verweilzeit in der Desaktivatorzone [min] | Endkonzentration instabiler Endgruppen [%] |
|---|---|---|---|---|
| 7 | 0,3 % Triethylamin | 155 | 7,5 | 3,9 |
| 8 | | 165 | | 2.1 |
| 9 | | 175 | | 0,7 |
| 10 | | 185 | | 0,1 |
| 11 | 4 % Wasser 0,3 % Triethylamin | 155 | 7,5 | 1,0 |
| 12 | | 165 | | 0,8 |
| 13 | | 175 | | 0,6 |
| 14 | | 185 | | 0,8 |

Für die Bestimmung der instabilen Endgruppen wird das aus dem Rohrreaktor anfallende Polyacetal in einer alkalischen Methanol-Wasser-Lösung bei 170°C behandelt, um die instabilen Kettenenden abzubauen.

Die alkalische Methanol-Wasser-Lösung wird angesetzt aus 400 ml demineralisiertem Wasser, 600 ml Methanol und 3,4 ml 25 %igem Ammoniak.

Von der zu analysierenden Polyacetalprobe werden 20 bis 1000 mg in einen 150 ml Kleinautoklaven eingewogen und 40 ml der alkalischen Methanol-Wasser-Lösung zugesetzt. Die Probe wird eine Stunde bei 170°C behandelt. Anschließend wird abgekühlt und filtriert. Der während der Behandlung abgespaltene Formaldehyd liegt in der Lösung vor und wird nach der Lutidinmethode (T. Nash, Biochem. J., Vol. 55, 416 (1953) bestimmt. Er wird auf die Einwaage bezogen und ist ein MaB für die instabilen Kettenenden.

## Patentansprüche

1. Verfahren zur kontinuierlichen Herstellung von endgruppenstabilen Homo- und Copolyoxymethylenen in homogener Phase wobei Formaldehydoligomere in Gegenwart von Protonensäuren als Initiatoren in einem ersten Verfahrensschritt in einer Polymerisationszone bei in der Praxis bekannten Werten für Temperatur und Druck polymerisiert werden, in einem zweiten Verfahrensschritt der Initiator durch Zugabe eines Desaktivators desaktiviert wird und in einem nachgeschalteten Entgasungsaggregat die flüchtigen Bestandteile aus dem Reaktionsgemisch entfernt werden, dadurch gekennzeichnet, daß die Polymerisation und die Desaktivierung in einem Rohrreaktor mit statischen Mischelementen ausgeführt werden, wobei ein fließender Übergang ohne Abtrennvorrichtungen zwischen Polymerisations- und Desaktivierungszone besteht, der lediglich durch die Zugabe des Desaktivators festgelegt ist, die Verweilzeit in der Polymerisationszone 0,1 bis 10 min und in der Desaktivierungszone 1 bis 15 min beträgt, neben der Desaktivierung eine Stabilisierung der Kettenenden in Gegenwart von Restmonomeren vorgenommen wird und gegebenenfalls die Zugabe von Zusatzstoffen nach erfolgter Entgasung in einem Konfektionierextruder erfolgt.

2. Verfahren nach Anspruch 1, dadurch gekennzeichnet, daß der Initiator in Mengen von 0,01 bis 50 ppm, insbesondere 0,01 bis 5 ppm eingesetzt wird und die Verweilzeit in der Polymerisationsphase 0,3 bis 5 Minuten, insbesondere 0,5 bis 2 Minuten beträgt.

3. Verfahren nach Anspruch 1 oder 2, dadurch gekennzeichnet, daß ein Copolyoxymethylen hergestellt wird, bei dem die Stabilisierung durch hydrolytischen Abbau der Kettenenden erfolgt.

4. Verfahren nach Anspruch 1 oder 2, dadurch gekennzeichnet, daß ein Homopolyoxymethylen hergestellt wird, bei dem die Stabilisierung durch eine Verkappungsreaktion erfolgt.

5. Verfahren nach einem oder mehreren der Ansprüche 1 bis 4, dadurch gekennzeichnet, daß der Initiator in gelöster, verdünnter Form eingesetzt wird und vorzugsweise eine Hetero- oder Isopolysäure darstellt.

6. Verfahren nach einem oder mehreren der Ansprüche 1 bis 5, dadurch gekennzeichnet, daß die Verweilzeit im zweiten Verfahrensschritt 2 bis 10 Minuten und der Druckbereich 20 bis 200 bar, vorzugsweise 20 bis 50 bar, beträgt.

7. Verfahren nach einem oder mehreren der Ansprüche 1 bis 6, dadurch gekennzeichnet, daß zur Desaktivierung des Initiators basische Verbindungen in Mengen von 0,001 bis 3,0 Gew.-%, vorzugsweise 0,02 bis 2,0 und insbesondere 0,05 bis 1,0 Gew.-%, bezogen auf die Polymermenge, eingesetzt werden.

8. Verfahren nach Anspruch 7, dadurch gekennzeichnet, daß Soda, Dinatriumhydrogenphosphat, aliphatische oder aromatische primäre, sekundäre oder tertiäre Amine, vorzugsweise leicht flüchtige tertiäre Amine eingesetzt werden.

9. Verfahren nach Anspruch 7 oder 8, dadurch gekennzeichnet, daß die Desaktivierung bei Temperaturen von 150°C bis 250°C, vorzugsweise 170°C bis 200°C erfolgt und, im unteren Temperaturbereich, gegebenenfalls zusätzlich zu den basischen Verbindungen Wasser oder primäre Alkohole mit bis zu 3 C-Atomen in einer Menge von 0,5 bis 5 Gew.-%, bezogen auf die Polymermenge, eingesetzt werden.

10. Verfahren nach Anspruch 7 oder 8, dadurch gekennzeichnet, daß die Desaktivierung bei Temperaturen von 175°C bis 250°C, vorzugsweise 175°C bis 200°C erfolgt, wobei in Abwesenheit von Wasser oder primären Alkoholen gearbeitet wird.

11. Verfahren nach einem oder mehreren der Ansprüche 1 bis 10, dadurch gekennzeichnet, daß im Anschluß an die Entgasung Zusatzstoffe in Form von Stabilisatoren, Nukleierungsmittel, Pigmenten, Gleitmittel und Füllstoffen zugegeben werden.

## Claims

1. A process for the continuous preparation of germinal group-stable homo- and copolyoxymethylenes in the homogeneous phase, where, in the presence of protic acids as initiators, formaldehyde oligomers are polymerized in a first process step in a polymerization zone at temperature and pressure values which are known in practice, the initiator is deactivated in a second process step by addition of a deactivator, and the volatile constituents are removed from the reaction mixture in a downstream degassing unit, wherein the polymerization and the deactivation are carried out in a tubular reactor with static mixing elements where there is a smooth transition, without separation devices, between the polymerization zone and the deactivation zone which is determined exclusively by the addition of the deactivator, the residence time in the polymerization zone is from 0.1 to 10 minutes and in the deactivation zone is from 1 to 15 minutes, in addition to the deactivation, stabilization of the chain ends is carried out in the presence of residual monomers, and, where appropriate, additives are added after degassing has been carried out in a formulating extruder.

2. The process as claimed in claim 1, wherein the initiator is employed in amounts of from 0.01 to 50 ppm, in particular from 0.01 to 5 ppm, and the residence time in the polymerization phase is from 0.3 to 5 minutes, in particular from 0.5 to 2 minutes.

3. The process as claimed in claim 1 or 2, wherein a copolyoxymethylene is prepared in which the stabilization is effected by hydrolytic degradation of the chain ends.

4. The process as claimed in claim 1 or 2, wherein a homopolyoxymethylene is prepared in which the stabilization is effected by a capping reaction.

5. The process as claimed in one or more of claims 1 to 4, wherein the initiator is employed in dissolved, dilute form and is preferably a hetero-or isopolyacid.

6. The process as claimed in one or more of claims 1 to 5, wherein the residence time in the second process step is from 2 to 10 minutes and the pressure range is from 20 to 200 bar, preferably from 20 to 50 bar.

7. The process as claimed in one of more of claims 1 to 6, wherein the deactivation of the initiator is carried out using basic compounds in amounts of from 0.001 to 3.0% by weight, preferably from 0.02 to 2.0% by weight and in particular from 0.05 to 1.0% by weight, based on the amount of polymer.

8. The process as claimed in claim 7, wherein soda, disodium hydrogenphosphate, aliphatic or aromatic primary, secondary or tertiary amines, preferably readily volatile tertiary amines, are employed.

9. The process as claimed in claim 7 or 8, wherein the deactivation is carried out at temperatures of from 150°C to 250°C, preferably from 170°C to 200°C and, in the lower temperature range, where appropriate, water or primary alcohols having up to 3 carbon atoms are employed in an amount of from 0.5 to 5% by weight, based on the amount of polymer, in addition to the basic compounds.

10. The process as claimed in claim 7 or 8, wherein the deactivation is carried out at temperatures of from 175°C to 250°C, preferably from 175°C to 200°C, the deactivation taking place in the absence of water or primary alcohols.

11. The process as claimed in one or more of claims 1 to 10, wherein additives in the form of stabilizers, nucleating agents, pigments, lubricants and fillers are added after the degassing.

## Revendications

1. Procédé de préparation continue en phase homogène d'homopolyoxyméthylènes et de copolyoxyméthylènes stables à groupements terminaux, dans lequel des oligomères de formaldéhyde sont polymérisés lors d'une première étape du procédé en présence d'acides protoniques comme initiateurs dans une zone de polymérisation à des valeurs de température et de pression connues dans la pratique, l'initiateur est désactivé lors d'une deuxième étape du procédé par addition d'un désactivateur, et les composants volatils sont éliminés du mélange réactionnel dans un appareil de dégazage placé plus loin, caractérisé en ce que la polymérisation, la désactivation et le dégazage sont effectués dans un réacteur tubulaire avec des éléments de mélange statiques, une transition fluide existant sans dispositifs de séparation entre zone de polymérisation et zone de désactivation, qui ne peut être établie que par addition du désactivateur, le temps de séjour dans la zone de polymérisation étant de 0,1 à 10 minutes et dans la zone de désactivation de 1 à 15 minutes, outre la désactivation, une stabilisation des extrémités de chaînes ayant lieu en présence de monomères résiduels, et le cas échéant l'addition d'additifs s'effectuant dans une extrudeuse de confection après un dégazage effectué.

2. Procédé suivant la revendication 1, caractérisé en ce que l'initiateur est utilisé dans des quantités de 0,01 à 50 ppm, en particulier 0,01 à 5 ppm et le temps de séjour dans la phase de polymérisation est de 0,3 à 5 minutes, en particulier 0,5 à 2 minutes.

3. Procédé suivant la revendication 1 ou 2, caractérisé en ce qu'on prépare un copolyoxyméthylène, pour lequel la stabilisation s'effectue par décomposition hydrolytique des extrémités de chaînes.

4. Procédé suivant la revendication 1 ou 2, caractérisé en ce qu'on prépare un homopolyoxyméthylène, pour lequel la stabilisation s'effectue par une réaction de recouvrement.

5. Procédé suivant l'une ou plusieurs des revendications 1 à 4, caractérisé en ce que l'initiateur est utilisé sous forme dissoute, diluée et présente de préférence un hétéropolyacide ou un isopolyacide.

6. Procédé suivant l'une ou plusieurs des revendications 1 à 5, caractérisé en ce que le temps de séjour lors de la deuxième étape du procédé est de 2 à 10 minutes et le domaine de pression est de 20 à 200 bars, de préférence 20 à 50 bars.

7. Procédé suivant l'une ou plusieurs des revendications 1 à 6, caractérisé en ce que des composés basiques sont utilisés pour la désactivation de l'initiateur dans des quantités de 0,001 à 3,0% en poids, de préférence 0,02 à 2,0 et en particulier 0,05 à 1,0% en poids, sur base de la quantité de polymère.

8. Procédé suivant la revendication 7, caractérisé en ce qu'on utilise de la soude, de l'hydrogénophosphate disodique, des amines aliphatiques ou aromatiques primaires, secondaires ou tertiaires, de préférence des amines tertiaires facilement volatiles.

9. Procédé suivant la revendication 7 ou 8, caractérisé en ce que la désactivation s'effectue à des températures de 150°C à 250°C, de préférence 170°C à 200°C et, on utilise dans le domaine inférieur de température, le cas échéant en plus des composés basiques, de l'eau ou des alcools primaires avec jusqu'à 3 atomes de carbone, dans une quantité de 0,5 à 5% en poids, sur base de la quantité de polymère.

10. Procédé suivant la revendication 7 ou 8, caractérisé en ce que la désactivation s'effectue à des températures de 175°C à 250°C, de préférence 175°C à 200°C, durant laquelle on travaille en l'absence d'eau ou d'alcools primaires.

11. Procédé suivant l'une ou plusieurs des revendications 1 à 10, caractérisé en ce que des additifs sous forme de stabilisants, d'agents de nucléation, de pigments, de lubrifiants et de charges sont ajoutés à la suite du dégazage.
